# EUROPEAN PATENT APPLICATION

(11) **EP 4 826 126 A1**
(43) Date of publication of application: **21.10.2026**
(21) Application number: 26151493.9
(22) Date of filing: 13.01.2026
(51) Int. Cl.: C25B 1/04, C25B 9/75, C25B 11/032, C25B 9/17, C25B 11/04

(54) **INTEGRATED COMPONENT, ELECTROCHEMICAL REACTION DEVICE AND PREPARATION METHOD THEREOF**

(30) Priority: 17.04.2025 CN 202510486877
(71) Applicant: Sungrow Power Supply Co., Ltd., Hefei, Anhui 230088 (CN)
(72) Inventor: LIU, Fang, 81541 Munich (DE); GARCIA TORREGROSA, Ivan, 1101 BV Amsterdam (NL); ZHAO, Lin, 81541 Munich (DE)
(74) Representative: Zacco Norway AS

(57) **Abstract**

The present disclosure provides an integrated component, an electrochemical reaction device and a preparation method, wherein the method for preparing the integrated component comprises: providing a bipolar plate and a porous transport layer to be integrated, contacting and aligning the bipolar plate and the porous transport layer, welding the contacted and aligned bipolar plate and porous transport layer together and producing a nitride on the surface of the porous transport layer. Through the integration of bipolar plate and porous transport layer, the electrical conductivity and thermal conductivity can be improved, and a nitride protective layer is provided.

## Description

### CROSS REFERENCE TO RELATED APPLICATIONS

This application claims the priority of Chinese Patent Application No. 202510486877.4, filed with the China National Intellectual Property Administration on April 17, 2025, and titled with "INTEGRATED COMPONENT, ELECTROCHEMICAL REACTION DEVICE AND PREPARATION METHOD THEREOF".

### FIELD

The present disclosure relates to the technical field of electrochemical reaction devices, in particular to an integrated component, an electrochemical reaction device and a preparation method thereof.

### BACKGROUND

Electrochemical reaction devices are a kind of equipment or device to realize electrochemical reaction, including water electrolyzers (for example, proton exchange membrane (PEM) water electrolyzers, anion exchange membrane (AEM) water electrolyzers), fuel cells, electroplating and other electrochemical reaction devices with different application purposes. Electrochemical reaction devices usually comprise porous transport layer (PTL) and bipolar plates, but the properties of electrochemical reaction devices in related art is still not ideal in terms of electrical conductivity and/or thermal conductivity.

### SUMMARY

Through a long-term study, the inventors unexpectedly found that the electrical conductivity and/or thermal conductivity of an electrochemical reaction device with a bipolar plate and a porous transport layer can be improved and a nitride protective layer can be provided by the method comprising the following steps.

Therefore, based on the above findings, in the first aspect, a method for preparing an integrated component is provided by the present disclosure, which comprises: providing a bipolar plate and a porous transport layer to be integrated; contacting and aligning the bipolar plate and the porous transport layer; welding the contacted and aligned bipolar plate and porous transport layer together and forming a nitride on the surface of the porous transport layer.

The inventors found that by combining the bipolar plate and the porous transport layer together, that is, integrating them together, the property of the electrochemical reaction device having the bipolar plate and the porous transport layer can be improved, for example, the electrical conductivity and/or thermal conductivity of the electrochemical reaction device are improved, and at the same time, a nitride for protection can be formed on the surface of the porous transport layer.

In some embodiments, the welding the contacted and aligned bipolar plate and porous transport layer together and forming a nitride on the surface of the porous transport layer comprises: welding the contacted and aligned bipolar plate and porous transport layer together in an inert atmosphere; nitriding the welded bipolar plate and porous transport layer in a nitrogen atmosphere to form a nitride on the surface of the porous transport layer. That is, the welding of the bipolar plate and the porous transport layer and the surface nitriding of the porous transport layer can be realized in two steps.

In some embodiments, the welding the contacted and aligned bipolar plate and porous transport layer together and forming a nitride on the surface of the porous transport layer comprises: welding the contacted and aligned bipolar plate and porous transport layer together in a nitrogen atmosphere and forming a nitride on the surface of the porous transport layer in the welding process. That is, the welding of the bipolar plate and porous transport layer and the surface nitriding of the porous transport layer can be realized in one step.

In some embodiments, after contacting and aligning the bipolar plate and the porous transport layer, the method further comprises applying a preset pressing force to the contacted and aligned bipolar plate and porous transport layer. In some embodiments, after contacting and aligning the bipolar plate and the porous transport layer, the bipolar plate and the porous transport layer are clamped and pressed by a plate clamp.

In some embodiments, the welding the contacted and aligned bipolar plate and porous transport layer together and forming a nitride on the surface of the porous transport layer are carried out in a gas-tight chamber filled with nitrogen. In some embodiments, the intensity of pressure inside the gas-tight chamber is greater than that outside the gas-tight chamber.

In some embodiments, the welding the contacted and aligned bipolar plate and porous transport layer together and forming a nitride on the surface of the porous transport layer are carried out by means of laser scanning. In some embodiments, the gas-tight chamber is provided with a laser source for carrying out laser scanning.

In another aspect of the present disclosure, an integrated component prepared by the method of the present disclosure is provided.

In another aspect of the present disclosure, an electrochemical reaction device is provided, which comprises the integrated component of the present disclosure.

In another aspect of the present disclosure, a method for preparing an electrochemical reaction device is further provided, which comprises: preparing an integrated component by the method of the present disclosure, and assembling and obtaining the electrochemical reaction device based on the integrated component.

In another aspect of the present disclosure, an integrated component is correspondingly provided, which comprises a bipolar plate and a porous transport layer, and the bipolar plate and the porous transport layer are integrated into one component by direct contact.

In some embodiments, there is no gap between the bipolar plate and the porous transport layer.

In some embodiments, the porous transport layer and the bipolar plate are in direct contact to form a plate-like structure.

In some embodiments, the integrated component has a thickness of 50 microns to 5000 microns.

### BRIEF DESCRIPTION OF THE DRAWINGS

For more clearly illustrating the technical solutions in the present disclosure or the related art, the drawings for describing the present disclosure or the related art will be briefly described below. Apparently, the drawings in the following description only relate to some embodiments of the present disclosure, and other drawings may be obtained by those skilled in the art based on the drawings without any creative work.
FIG. 1 is a schematic cross-sectional view showing a stack of an electrochemical reaction device.
FIG. 2 is a comparative schematic diagram of an ordinary stack comprising bipolar plates and porous transport layers versus an integrated stack comprising bipolar plates and porous transport layers, wherein, FIG. 2a is a schematic diagram showing an ordinary stack comprising bipolar plates and porous transport layers; FIG. 2b is a schematic diagram showing an integrated stack comprising bipolar plates and porous transport layers.
FIG. 3 is photographs of two kinds of common porous transport layers in proton exchange membrane water electrolyzers in the related art, wherein, a) is a titanium particle-sintered porous transport layer; b) is a titanium fiber-sintered porous transport layer.
FIG. 4 is a 3D schematic view of a laboratory welding clamp used for laser welding and laser nitriding of bipolar plates and porous transport layers, wherein the left figure is an overall view; the right figure is an enlarged view of the cross section of the equipment.
FIG. 5 is a schematic diagram of an embodiment according to the present disclosure, wherein both the laser head and the welding clamp are placed in a gas-tight chamber filled with pure nitrogen.
FIG. 6 is a schematic diagram of an embodiment according to the present disclosure in which laser scanning is performed using a clamp.
FIG. 7 is a flowchart of an embodiment of the preparation method of an integrated component according to the present disclosure.

### DETAILED DESCRIPTION

For better illustrating the technical means and effects of the present disclosure, hereinafter, the present disclosure will be further described in detail in conjunction with non-limiting examples. Embodiments of the present disclosure (including descriptions provided in the embodiments) are intended to illustrate embodiments of the present disclosure and are not intended to limit the scope of any claims. According to the present disclosure, those skilled in the art will understand that many changes can be made to the disclosed specific embodiments and the same or similar results will still be obtained without departing from the spirit and scope of the present disclosure.

Unless otherwise specified, the terms used in this specification and claims have the following meanings.

As used herein, the term "bipolar plate" or "polar plate" may refer to an anode plate and/or a cathode plate, and a bipolar plate may be composed of a cathode plate (single cathode plate) and an anode plate (single anode plate), or may refer to a single polar plate. As used herein, "polar plate" and "bipolar plate" can be used interchangeably, and "bipolar plate" can be used to express the meaning of a single polar plate.

In some embodiments, the bipolar plate is a metal plate, that is, a metal-based plate, such as a titanium-based plate. Among them, the titanium-based plate can contain other metal or non-metal components, such as titanium alloy plates, in addition to metal titanium. Alternatively, the titanium-based plate only contains metal titanium, such as a pure titanium plate. In some embodiments, the alloy metal of the titanium alloy consists of a metal selected from the group consisting of titanium, chromium, nickel, aluminum, tantalum, zirconium, tungsten and niobium. In some embodiments, the titanium alloy is a titanium-chromium alloy, a titanium-aluminum alloy, a titanium-vanadium alloy, a titanium-nickel alloy, a titanium-chromium-aluminum alloy, a titanium-aluminum-vanadium alloy, a titanium-nickel-chromium alloy, a titanium-nickel-aluminum alloy or a titanium-nickel-vanadium alloy. In some embodiments, the bipolar plate in the present disclosure is a titanium metal plate (i.e., a pure titanium metal plate); in some embodiments, the bipolar plate in the present disclosure is a titanium-based stainless steel bipolar plate.

As used herein, "integration" means combining different parts together. Therefore, the integrated component based on bipolar plate and porous transport layer herein means a component formed by combining bipolar plate and porous transport layer together. Integration can lead to improvements of cost and/or property. For example, the interface between bipolar plate and porous transport layer can be eliminated by integration, which is beneficial to improve the electrical conductivity and thermal conductivity of bipolar plate and porous transport layer. In addition, the integration can also improve the mechanical properties of the porous transport layer, which allows the use of thinner sheets (for example, less than 500 microns) at higher pressure difference (for example, up to 20 bar). In addition, through integration, the processing cost can be reduced.

As used herein, nitrogen atmosphere refers to an atmosphere in which nitrogen gas is the basic component. In some embodiments, the nitrogen atmosphere is substantially free of oxygen, for example, less than 5%, 4%, 3%, 2% or 1% oxygen. In some embodiments, the nitrogen atmosphere is substantially pure nitrogen gas, for example, the nitrogen atmosphere comprises at least 95%, 96%, 97%, 98% or 99% nitrogen gas. The nitrogen atmosphere may comprise nitrogen and an optional rare gas (such as argon).

In the present disclosure, "plate-like structure" refers to a plate-like or sheet-like structure, or a substantially plate-like or sheet-like structure.

In the description of this specification, description with reference to the terms "some embodiments", "some examples", "for example", "embodiments" or the like means that the specific features, structures, materials or characteristics described in connection with the embodiment or example are included in at least one embodiment or example of the present disclosure. In this specification, the above terms are schematic. Furthermore, the described specific features, structures, materials or characteristics may be combined in any one or more embodiments or examples in any appropriate manner. In addition, those skilled in the art can combine the different embodiments or examples and the features of the different embodiments or examples described in this specification, unless they are contradictory.

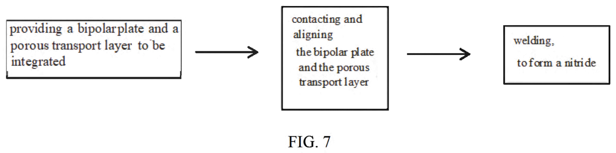

In terms of the method for preparing the integrated component of the present disclosure, in some embodiments, as shown in FIG. 7, the preparation method comprises: providing a bipolar plate and a porous transport layer to be integrated; contacting and aligning the bipolar plate and the porous transport layer; welding the contacted and aligned bipolar plate and porous transport layer together and forming a nitride on the surface of the porous transport layer.

In this example, by combining the bipolar plate and the porous transport layer together, that is, integrating them together, the property of the electrochemical reaction device having a bipolar plate and a porous transport layer can be improved, such as the electrical conductivity and/or thermal conductivity of the electrochemical reaction device is improved, and at the same time, nitride can be formed on the surface of the porous transport layer to prevent the porous transport layer from being corroded, so as to achieve the purpose of protection.

In some embodiments, the welding the contacted and aligned bipolar plate and porous transport layer together and forming a nitride on the surface of the porous transport layer comprises: welding the contacted and aligned bipolar plate and porous transport layer together in an inert atmosphere; nitriding the welded bipolar plate and porous transport layer in nitrogen atmosphere to form a nitride on the surface of the porous transport layer. Exemplarily, contacted and aligned bipolar plate and porous transport layer can be welded together in argon atmosphere first, for example, laser welding can be used; then the welded bipolar plate and the porous transport layer are nitrided in nitrogen atmosphere, for example, laser nitriding can be used, thereby forming nitride. In this example, the welding of the bipolar plate and the porous transport layer and the surface nitriding of the porous transport layer can be realized in two steps.

In some other embodiments, the welding the contacted and aligned bipolar plate and porous transport layer together and forming a nitride on the surface of the porous transport layer comprises: welding the contacted and aligned bipolar plate and porous transport layer together in nitrogen atmosphere and forming a nitride on the surface of the porous transport layer in the welding process. Exemplarily, the contacted and aligned bipolar plate and porous transport layer can be welded together in nitrogen atmosphere and a nitride is formed on the surface of the porous transport layer in the welding process, for example, laser welding can be used, and nitride can be formed at the same time in the welding process because the welding takes place in nitrogen atmosphere. In this example, the welding of the bipolar plate and the porous transport layer and the surface nitriding of the porous transport layer can be realized in one step.

In the above-mentioned example, a highly stoichiometric and strong nitride (for example, titanium nitride TiN) layer can be formed as a protective layer during the welding process by carefully controlling welding parameters. A highly stoichiometric nitride (for example, TiN) layer is beneficial to prevent hydrogen from diffusing into metals (for example, titanium) and avoid hydrogen embrittlement. The nitride layer can further prevent oxidation of metals (for example, titanium). This means that there is no need to apply expensive coatings to prevent internal corrosion.

Based on this, another surprise of the present disclosure is that it is found that a high-quality nitride (for example, TiN) layer is directly formed during the welding process of the porous transport layer and the bipolar plate, so that the following advantageous technical effects can be obtained: for example, it is possible to avoid using an expensive coating as a protective layer; additional coating steps can be avoided; etc.

In some embodiments, the step of welding the contacted and aligned bipolar plate and porous transport layer together and forming a nitride on the surface of the porous transport layer is carried out in a gas-tight chamber filled with nitrogen gas. Exemplarily, the gas-tight chamber is filled with 85%, 90%, 95%, 96%, 97%, 98%, 99% or 100% of nitrogen. In some embodiments, the intensity of pressure inside the gas-tight chamber is greater than that outside the gas-tight chamber. Exemplarily, the pressure of the gas-tight chamber is higher than the ambient pressure, for example, the gas-tight chamber has an intensity of pressure higher than the ambient intensity of pressure, for example, at least 50 millibar, 100 millibar, 150 millibar, 200 millibar, 300 millibar, 400 millibar or 500 millibar higher than the ambient intensity of pressure.

In some embodiments, the welding is resistance welding or laser welding, such as laser welding. In some embodiments, laser welding is performed in a nitrogen atmosphere. For laser welding in nitrogen atmosphere, laser welding and laser nitriding (i.e., forming nitride protective layer, such as titanium nitride protective layer) are carried out at the same time, so as to simplify the process and reduce the production cost; in some embodiments, laser welding can be performed using a single laser source or a plurality of laser sources, wherein a plurality of laser sources can be at least 2, 3, 4, 5 or more laser sources.

Exemplarily, through laser welding in nitrogen atmosphere, laser welding and laser nitriding (forming nitride protective layer, such as titanium nitride protective layer) can be carried out at the same time, and the thickness of the formed nitride protective layer (such as titanium nitride) is 5 microns to 10 microns.

By the above-mentioned method, the two steps of forming a nitride protective layer and laser welding can be combined into one step, that is, laser welding treatment can be performed in a nitrogen atmosphere to form a nitride (e.g., titanium nitride) protective layer on the surface of the plate while integrating the porous transport layer and the bipolar plate. In this way, the cleaning and pretreatment of the surface of the plate to be treated can be reduced, and the pretreatment usually comprises degreasing, descaling and deoxidation of the single plate using dilute sulfuric acid solution, acetone, ethanol, distilled water, etc. This greatly saves processing steps and processing costs.

In the method of the present disclosure, the laser may be generated by a suitable laser generating device. The laser may have a wavelength or an average wavelength of 800 nm to 1200 nm, 400 nm to 550 nm, or 300 nm to 400 nm. In the method of the present disclosure, the porous transport layer and the bipolar plate are integrated into one component, which is beneficial to improve the thermal conductivity at the interface between the porous transport layer and the bipolar plate, thereby making the current distribution in the catalyst layer area more uniform. This integration can be achieved by simple and cheap welding technology (such as resistance welding or laser welding).

In some embodiments, the airtight chamber is provided with a laser source, which can be a diode fiber laser, or an ultraviolet diode laser, or a CO2 laser, etc. and the diode fiber laser can be selected as the light source by considering efficiency and economy. Wherein, one or more same or different laser sources can be set in the gas-tight chamber at the same time. In this case, the bipolar plate and the porous transport layer are laser welded and laser nitrided by the laser sources in the gas-tight chamber filled with nitrogen gas.

In some embodiments, the welding the contacted and aligned bipolar plate and porous transport layer together and forming a nitride on the surface of the porous transport layer are carried out by means of laser scanning. For example, the bipolar plate and the porous transport layer can be laser welded and laser nitrided by one or more times of laser scans. Exemplarily, the laser scanning may be performed at least 2 times, 3 times, 4 times, 5 times, 6 times, 7 times, 8 times, 9 times, 10 times or more. In some embodiments, the moving speed of laser scanning is 0.5 mm/ sec to 20 mm/ sec, or 1 mm/ sec to 15 mm/ sec, or 2 mm/ sec to 10 mm/ sec, and the moving speed is relative to the scanning direction.

In the present disclosure, the used laser can be a nanosecond, picosecond to femtosecond pulse light source. Femtosecond pulse light source is adopted, which has high efficiency and less micro thermal deformation; and the equipment of nanosecond pulse light source is cheap. Laser nitriding process can use continuous light source, or nanosecond light source or picosecond pulse light source as laser.

In some embodiments, the surface temperature of the porous transport layer during laser welding and/or laser nitriding ranges from 900°C to 2500°C, or 1000°C to 2200°C, or 1200°C to 2000°C. Exemplarily, the temperature of the upper surface of the porous transport layer can range from 900°C to 2500°C by adjusting the welding parameters during laser welding, such as welding power, etc. In some embodiments, the power of the laser is 1 KW to 5 KW, and/or the time of laser welding does not exceed 1 min.

Although a solid combination between the porous transport layer and the bipolar plate can be formed by using other technologies such as sintering, its cost is obviously relatively high. Laser welding has advantages due to its simplicity and consistency. The use of high-power diodes and fiber lasers can reduce the cost and have advantages in energy efficiency and process yield.

The method of the present disclosure can be quickly and simply realized by laser welding. For example, for a bipolar plate with average size, the whole process of laser welding the porous transport layer and bipolar plate in nitrogen atmosphere can be completed at a speed of 50 cm²/s to 100 cm²/s. The required typical laser power ranges between 1 KW and 5 KW.

In some embodiments, after contacting and aligning the bipolar plate and the porous transport layer, it further comprises applying a preset pressing force to the contacted and aligned bipolar plate and the porous transport layer, and making the bipolar plate closely contact with the porous transport layer through the pressing force. Exemplarily, the bipolar plate can be contacted and aligned with the porous transport layer first, the alignment position is not limited here, and the aligning is performed according to actual needs; then, the aligned bipolar plate and porous transport layer are clamped by a plate clamp (for example, a titanium plate clamp), and a preset pressing force is applied to the aligned bipolar plate and porous transport layer by adjusting the clamping force of the plate clamp, thereby clamping the bipolar plate and porous transport layer, ensuring good interface contact, facilitating tightly the integration of the two after welding, and further improving the property. Wherein, the preset pressing force is set according to the actual needs, and there is no limit here.

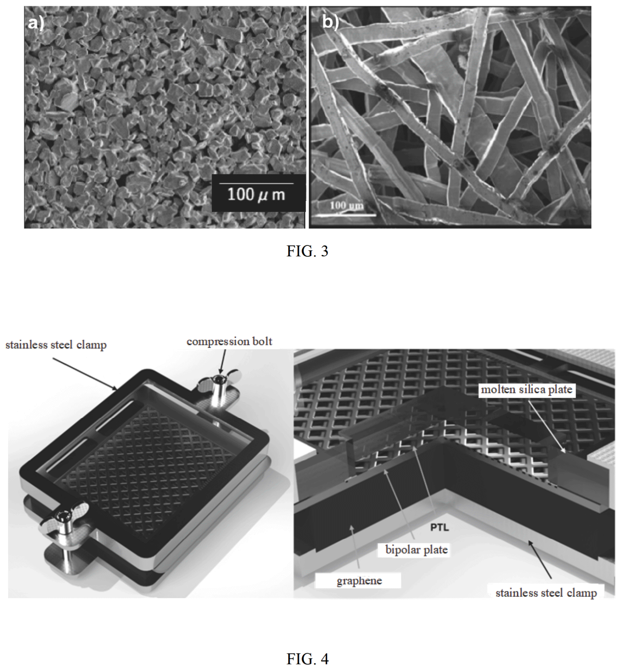

In carrying out the method of the present disclosure, in order to ensure good contact between metal parts, a clamp equipped with a compression bolt and a transparent molten quartz window can be used to apply a pressure of 0.1 MPa to 1 MPa to allow laser to pass through while clamping, as shown in FIG. 4 to FIG. 5. The graphite base is used as a heat dissipation medium in direct contact with the bipolar plate. Nitrogen is supplied to the inlet of the bipolar plate through the orifice in the graphite base at a pressure of ≥ 0.2 bar.

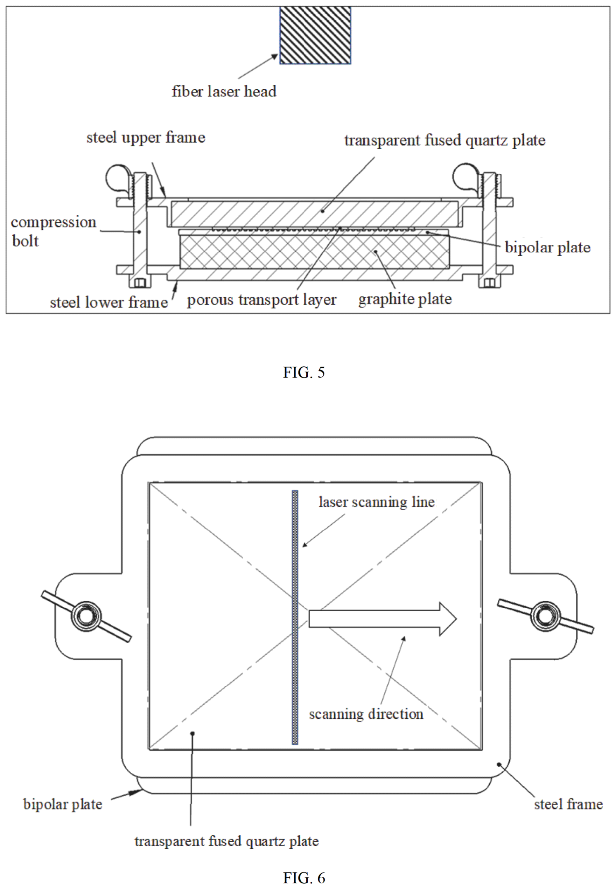

In laser continuous welding, the clamp can be customized according to the porous transport layer and bipolar plate to be integrated, so as to better implement the method of the present disclosure. In some embodiments of the preparation method of the present disclosure, the porous transport layer and the bipolar plate may be contacted and aligned, and placed on a clamp, and during the welding process, the contacted and aligned porous transport layer and bipolar plate are clamped by the clamp. FIG. 6 shows an embodiment of the present disclosure in which laser scanning is performed using a clamp. Wherein, laser scanning can be realized by moving the laser head or welding clamp, or by moving them in the opposite direction. If pulse laser is used instead of continuous wave laser, the laser head and welding clamp will not move, and the vibrating mirror system integrated in the laser head will project the required pattern along the surface. Although optimized pulse laser can be used in this process, continuous wave laser is preferred because of its simplicity and low cost.

In some embodiments, a transparent component, such as a fused silicon plate, can be placed on the contacted bipolar plate and porous transport layer, so as to compact the bipolar plate and the porous transport layer.

According to the method for preparing the integrated component of the present disclosure, after the bipolar plate and the porous transport layer are integrated, there is no gap between the porous transport layer and the bipolar plate, and the related contact resistance is correspondingly eliminated or reduced. In addition, the coating treatment on the interface between the bipolar plate and the porous transport layer may no longer be required, which greatly reduces raw materials and processing costs. In addition, the thermal conductivity at the interface between bipolar plate and porous transport layer can also be improved. The mechanical strength of the anode porous transport layer will be improved, thus allowing thinner plates (e.g., less than 500 microns in thickness) to be used at a working pressure up to 20 bar. Due to the integration of bipolar plate and anode porous transport layer, the assembly process of the stack will be simplified.

In some embodiments, it may further comprise the step of optionally plating other protective layers or functional layers on the nitride layer after the nitride layer is formed. Moreover, this additional protective layer or functional layer can be coated on part of the surface. This step is not necessary and can be selected according to actual needs.

In the present disclosure, the integration of the porous transport layer and the bipolar plate can be realized by the method for preparing an integrated component based on the bipolar plate and the porous transport layer. Wherein, the bipolar plate can be preformed as required, and the forming design refers to carving on one side (front) of the metal plate to form lands and channels, thus forming a pre-designed flow channel pattern. In some embodiments, the bipolar plate can be produced and obtained by automatic forming welding technology, and in this case, the integration of the porous transport layer and the bipolar plate can be carried out after the bipolar plate is welded. In some embodiments, the integration of the porous transport layer and the bipolar plate directly participates in the welding process of bipolar plate, that is, the integration can be directly carried out in the bipolar plate processing process, which means that the processing cost is further reduced.

On the other hand, the present disclosure provides an integrated component prepared by the method of the present disclosure described above.

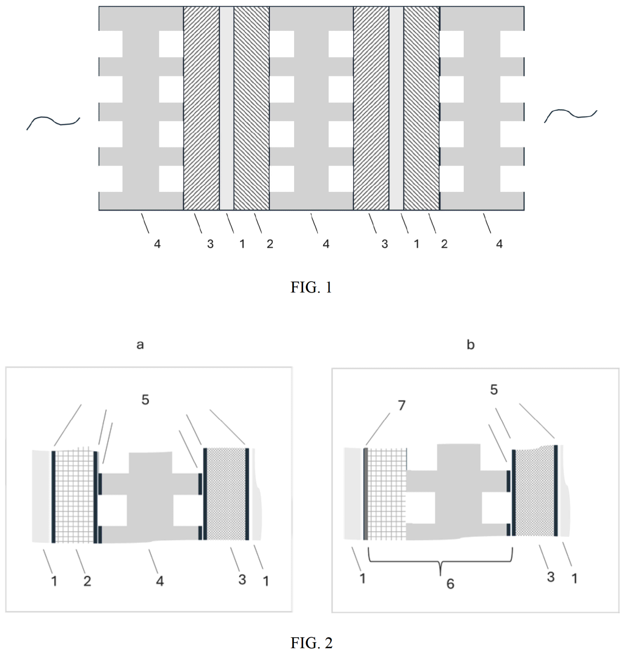

In another aspect, the present disclosure provides an electrochemical reaction device comprising the integrated component of the present disclosure. Referring to FIG. 1, which is a schematic diagram of a stack of electrochemical reaction devices. wherein, 1 is a component comprising a separator, an anode and a cathode catalyst layer, which is called a catalyst coated membrane (CCM) in some applications (for example, fuel cells and water electrolyzers, etc.); 2 and 3 are porous transport layers, one is between the anodic side of the module 1 and the module 4, which is bipolar plate, and the other is between the cathodic side of the module 1 and the module 4.

FIG. 2a is a schematic diagram showing an ordinary stack comprising bipolar plates and porous transport layers, wherein, 1 is a component comprising a separator layer, an anode and a cathode catalyst layer. The component is called CCM in some applications (for example, fuel cells and water electrolyzers, etc.); 2 and 3 are porous transport layers, one at the anode and the other at the cathode; 4 is bipolar plate; 5 is an optional coating on the surface of the bipolar plate and the porous transport layer of anode and cathode.

FIG. 2b is a schematic diagram showing the integration of bipolar plate and porous transport layer. Compared with FIG. 2a, the physical interface between bipolar plate and porous transport layer can be eliminated, that is, there is no physical interface between bipolar plate and porous transport layer on one side, and in this case, no additional plating layer is needed. 7 is a metal nitride layer on the surface of the metal porous transport layer. On its surface, other coatings can be optionally plated as required.

In another aspect of the present disclosure, a method for preparing an electrochemical reaction device is provided, which comprises: preparing an integrated component based on a bipolar plate and a porous transport layer by the method according to the present disclosure; and assembling an electrochemical device using an integrated component based on the bipolar plate and the porous transport layer.

The electrochemical reaction device in the present disclosure can be selected from the group consisting of proton exchange membrane (PEM) water electrolyzers, alkaline water electrolyzers, anion exchange membrane (AEM) water electrolyzers, fuel cells and carbon dioxide emission reduction equipment.

FIG. 3 is photographs of two kinds of common porous transport layers in a proton exchange membrane water electrolyzer (PEMWE) in the related art, wherein, FIG. 3a shows a titanium particle-sintered porous transport layer and FIG. 3b shows a titanium fiber-sintered porous transport layer.

On the other hand, an integrated component is provided, which comprises a bipolar plate and a porous transport layer, and the bipolar plate and the porous transport layer are integrated in one component by direct contact. In some embodiments, there is no gap between the bipolar plate and the porous transport layer. Exemplarily, the bipolar plate and the porous transport layer are in direct contact, so that there is no gap between them.

In some embodiments, the porous transport layer is in the form of a titanium-based mesh or a titanium perforated plate. Exemplarily, the porous transport layer is a titanium particle-sintered porous transport layer or a titanium fiber-sintered porous transport layer.

In some embodiments, the porous transport layer and the bipolar plate are in direct contact to form a plate-like structure. In some embodiments, part or all of the porous transport layer is in direct contact with the bipolar plate, to form a plate-like structure.

In some embodiments, the thickness of the integrated component is 50 microns to 5000 microns. For example, the thickness of the integrated component is 50 microns to 1000 microns, 50 microns to 500 microns, 50 microns to 400 microns or 50 microns to 300 microns.

In some embodiments, the thickness of the bipolar plate may be between 50 microns and 5000 microns, and the thickness of the porous transport layer may be between 100 microns and 500 microns. The thickness of the bipolar plate as a metal plate may be 20 to 5000 microns, such as 50 microns, 100 microns, 200 microns, 300 microns, 400 microns, 500 microns, 600 microns, 700 microns, 800 microns, 900 microns or 1000 microns.

The porous transport layer in the present disclosure can be made of any suitable material. In some embodiments, the porous transport layer is made of a metal material or a metal-based material. Exemplarily, the porous transport layer is a titanium-based plate. In the case that the titanium-based plate is composed of a titanium alloy, in some embodiments, titanium accounts for more than 75%, more than 80%, more than 85%, more than 90% or even more than 95% by mass in the alloy. The alloy material can be an alloy composed of major component elements and minor component elements. In some embodiments, the major component element is titanium, and the minor component element is selected from the group consisting of tungsten, molybdenum, zirconium, chromium, niobium, vanadium, iron, silicon, carbon, other trace impurities, and a combination thereof.

The present disclosure has achieved at least one of the following beneficial technical effects:
- 1. The integration of bipolar plate and porous transport layer and the disappearance of interface, are beneficial to improve the electrical conductivity and thermal conductivity of bipolar plate and porous transport layer;
- 2. Nitride layer is formed on the integrated porous transport layer and bipolar plate by using nitrogen atmosphere as protective atmosphere for welding process, which can allow the use of thinner coating (for example, PGM (platinum group metal) coating), even without using expensive coating as modification layer, to prevent hydrogen embrittlement and oxidation;
- 3. Because the physical interface between the porous transport layer and the bipolar plate is removed the resistance is reduced, and when it is applied to the electrochemical reaction device, the property of the electrochemical reaction device, such as the electrolyzer is correspondingly improved;
- 4. The mechanical properties of the porous transport layer can be improved, which allows a thinner porous transport layer (for example, the thickness is less than 500 microns) to be used under a pressure difference of up to 20 bar;
- 5. The process of assembling the stack is simplified by integrating the bipolar plate and the porous transport layer;
- 6. The process is fast and efficient, and the porous transport layer and the bipolar plate can be welded by laser in 1 min to 2 min;
- 7. When the bipolar plate is produced by the stamping welding process, the integration of the bipolar plate and the porous transport layer can be combined with the bipolar plate production process, thereby further reducing the cost.

Furthermore, by the method of the present disclosure, a ready-to-use plate can be provided. Contrary to the process in the related art, the integrated component of bipolar plate and porous transport layer prepared by this method can be directly used in electrochemical reaction devices (for example, water electrolyzers or fuel cells), thus facilitating expansion and self-configuration according to process needs.

By the method of the present disclosure, a high-quality nitride protective layer (for example, TiN layer) can be formed. In particular, the obtained TiN layer is highly crystallizable and conformal. The TiN layer is mainly composed of Osbornite (stoichiometric TiN), and its thickness can vary from 5 microns to 10 microns.

### Example

### Example 1 Preparation of integrated component based on bipolar plate and porous transport layer

The preparation process of integrated component based on porous transport layer and bipolar plate comprised two main steps, and a single strong and durable component could be obtained. The laser source could be a continuous wave or a pulsed laser. Although different laser sources could be used, a wavelength of 1064 nm was preferred. The atmosphere could be controlled in two different ways. One way was that both the laser and the welding clamp was placed in a gas-tight chamber filled with pure nitrogen gas; and another way was that the method to provide nitrogen was through the graphite base, which could reduce the amount of waste gas and speed up the treatment. Although this required machining the graphite base to open holes to transport gas, this way could apply higher nitrogen pressure, thus improving diffusion kinetics.

This example was implemented in the way shown in FIG. 5, which belonged to the first case mentioned above. Refer to FIG. 5, in which the laser head and welding clamp were both in a gas-tight chamber filled with nitrogen gas, and the nitrogen pressure was 0.1 bar to 0.5 bar. The graphite base helped to dissipate heat, and could prevent the undesirable reaction between the bipolar plate and the steel bottom plate.

The first step of this process was to align and compress the porous transport layer and the bipolar plate using a steel shell with an optical window of fused silica. Pressure was applied to ensure good contact between weldments. For example, a compression bolt on a steel frame could be used to apply a pressure of 1 MPa.

Once the weldments were in good contact, the laser beam would pass through the molten silica plate and project onto the surface of the porous transport layer. The laser power was enough to approach the melting point of the metal, but the temperature was slightly lower than the melting point (90%). When continuous wave laser was used, multiple scans could be performed to ensure good welding. Typical scanning speed was 4 mm/s to 20 mm/s, and a single scan covered the whole area.

Laser scanning could be achieved by moving the laser head or the welding clamp, or by moving them in the opposite direction, see FIG. 6. If pulse laser was used instead of continuous wave laser, the laser head and welding clamp could keep still, and the vibrating mirror system integrated in the laser head would project the required pattern along the surface. Although optimized pulse laser could be used in this process, continuous wave laser was preferred due to simplicity and low cost.

## Claims

1. A method for preparing an integrated component, **characterized in that** it comprises:
providing a bipolar plate and a porous transport layer to be integrated;
contacting and aligning the bipolar plate with the porous transport layer;
welding the contacted and aligned bipolar plate and porous transport layer together, and forming a nitride on the surface of the porous transport layer.

2. The method according to claim 1, **characterized in that** the step of welding the contacted and aligned bipolar plate and porous transport layer together and forming a nitride on the surface of the porous transport layer comprises:
welding the contacted and aligned bipolar plate and porous transport layer together in an inert atmosphere; and
nitriding the welded bipolar plate and the porous transport layer in nitrogen atmosphere to form a nitride on the surface of the porous transport layer.

3. The method according to claim 1, **characterized in that** the step of welding the contacted and aligned bipolar plate and porous transport layer together and forming a nitride on the surface of the porous transport layer comprises:
welding the contacted and aligned bipolar plate and porous transport layer together in nitrogen atmosphere and forming a nitride on the surface of the porous transport layer in the welding process.

4. The method according to any one of claims 1 to 3, **characterized in that** after contacting and aligning the bipolar plate and the porous transport layer, the method further comprises applying a preset pressing force to the contacted and aligned bipolar plate and porous transport layer.

5. The method according to any one of claims 1 to 3, **characterized in that** the step of welding the contacted and aligned bipolar plate and porous transport layer together and forming a nitride on the surface of the porous transport layer is carried out in a gas-tight chamber filled with nitrogen.

6. The method according to claim 5, **characterized in that** the intensity of pressure inside the gas-tight chamber is greater than that outside the gas-tight chamber.

7. The method according to any one of claims 1 to 3, **characterized in that** the step of welding the contacted and aligned bipolar plate and porous transport layer together and forming a nitride on the surface of the porous transport layer is carried out by means of laser scanning.

8. The method according to claim 7, **characterized in that** the gas-tight chamber is provided with a laser source for carrying out laser scanning.

9. An integrated component prepared by the method according to any one of claims 1 to 8.

10. An electrochemical reaction device, **characterized in that** it comprises the integrated component according to claim 9.

11. A method for preparing an electrochemical reaction device, **characterized in that** it comprises:
preparing an integrated component by the method according to any one of claims 1 to 8;
and
assembling the integrated component and obtaining the electrochemical reaction device.

12. An integrated component, **characterized in that** it comprises a bipolar plate and a porous transport layer, wherein the bipolar plate and the porous transport layer are integrated into one component by direct contact.

13. The integrated component according to claim 12, **characterized in that** there is no gap between the bipolar plate and the porous transport layer.

14. The integrated component according to claim 8 or 13, **characterized in that** the porous transport layer and the bipolar plate are in direct contact to form a plate-like structure.

15. The integrated component according to claim 8 or 13, **characterized in that** the integrated component has a thickness of 200 microns to 5000 microns.
